# EUROPEAN PATENT SPECIFICATION

(11) **EP 1 197 110 B1**
(45) Date of publication and mention of the grant of the patent: **07.04.2004**
(21) Application number: 00949517.7
(22) Date of filing: 21.07.2000
(51) Int. Cl.: H04Q 7/36, H04Q 7/30, H04B 7/26

(54) **METHOD AND ARRANGEMENT FOR DETERMINING THE OPERATING FREQUENCIES OF BASE STATIONS OF AN INTERNAL NETWORK**
VERFAHREN UND ANORDNUNG ZUR BESTIMMUNG DER BETRIEBSFREQUENZEN VON BASISSTATION EINES INTERNEN NETZES
PROCEDE ET DISPOSITIF DE DETERMINATION DES FREQUENCES D'EXPLOITATION DES STATIONS DE BASE D'UN RESEAU INTERNE

(30) Priority: 23.07.1999 FI 991643
(43) Date of publication of application: 17.04.2002
(73) Proprietor: Nokia Corporation, 02150 Espoo (FI)
(72) Inventor: SUONVIERI, Jukka, FIN-33610 Tampere (FI); PARKKALI, Rauli, FIN-00250 Helsinki (FI)
(74) Representative: Brax, Matti Juhani
(86) International application number: PCT/FI2000/000657
(87) International publication number: WO 2001/011906

(56) References cited:
- EP-A2- 0 716 555
- WO-A1-00/01177
- GB-A- 2 325 818
- US-A- 5 475 869
- US-A- 5 846 209

## Description

The invention relates to redetermining the operating frequencies of base stations of a cellular radio network installed indoors, when the operating conditions of the internal network have changed from the previous situation.

Here an internal network means a cellular radio network or a part of a cellular radio network implemented indoors or in an otherwise restricted area. Here an external network means another cellular radio network or a part of a cellular radio network detected in the area of the internal network.

A problem with the known solutions is the fact that measurements have to be carried out again when changes have taken place in the operating frequencies of the base stations in the environment. This change causes a change of the spurious frequencies in the internal network, which may cause a deterioration in the quality of the connections of the internal network.

In addition, the need for a measuring device with sufficiently high capacity for performing a quick and accurate frequency scanning, due to the width of the frequency band to be measured, is a problem with the prior art solutions.

A known prior art publication number EP 0 716 555 A2 exists in which each base station of a cellular radio system performs repeated measurements on interference levels and selects into use such channels where the level of measured interference is low. Another known prior art publication number US 5,475,869 introduces an arrangement where also measurements describing interference from external networks are taken into account during channel allocation.

It is an objective of the invention to present a new, more advantageous solution for determining the operating frequencies of the base stations of the internal network and a method, which enables redetermination of the frequencies of the internal network without a new measurement of the interference level.

The invention relates to a method for redetermining the operating frequencies of the base stations of an internal network, when the operating conditions of the internal network have changed. The characteristic features of the method according to the invention are recited in the characterising portion of the independent claim directed to a method.

Here a change in the operating conditions of the internal network means at least an increase or decrease of base stations of the external network, changing of the operating frequencies and/or transmission powers and a change in the propagation of radiowaves caused by external conditions.

The invention also relates to an arrangement for redetermining the operating frequencies of the base stations of an internal network, which have earlier been determined by frequency measurement, when the operating conditions of the internal network have changed. The characteristic features of the arrangement according to the invention are recited in the characterising portion of the independent claim directed to an arrangement.

A special device for measuring interfering frequencies in order to find suitable frequencies inside a building according to a secret patent application FI 981491 (Configuration method for a base station) of the same applicant is preferably used in the frequency measurement. The device is used to measure the intensity of the interference level at the frequencies used by the cellular network. The device is moved in the building in the desired area of the internal network for finding free frequencies. On the basis of the measurement, operating frequencies with a lower interference level than the required field strength are charted for the base stations.

The spurious frequency spectrum is measured once in the area of the internal network, e.g. inside a building, plant area etc. for finding the frequency restrictions caused by the radio transmission of the external network to the internal network. The measurement data are transferred from the measuring device preferably by a data call to the Network Management System (NMS). The measuring device is then preferably a special mobile station adapted for use in measurements. At first, the frequencies of the base stations of the internal network are selected on the basis of the measurement. The external network may later start interfering with the internal network strongly, if a frequency already being used in the internal network is taken into use in a base station of the external network near the internal network. According to the invention, the original measurement and the frequency plans of the external network are used in the new planning of the frequencies of the internal network. Thus the area of the internal network need not be visited again for a new measurement.

The method functions especially well if it has been possible to measure and save during the measurement the cell information of radio transmissions of external cells that can be heard in the area of the internal network. If one of the frequencies being used in the internal network is given to a cell of the external network detected in the measurement, it is known for certain that the frequency of the base station of the internal network must be changed.

In addition, the frequencies selected for the use of the internal network can be checked after the selection by the measurement of the reception level and the Carrier/Interference ratio. This is preferably performed by a measuring device according to the invention.

Preferred embodiments of the invention are set forth in the dependent claims.

In the following, the invention will be described in greater detail with reference to the accompanying drawing, in which
- Figure 1: is a flow chart of a method according to a preferred embodiment of the invention for selecting the operating frequencies of the internal network,
- Figure 2: is a block diagram of an arrangement according to a preferred embodiment of the invention,
- Figure 3: shows an example of a measurement route for measuring the interfering frequencies,
- Figure 4: shows a saving form of the measurement results according to a preferred embodiment of the invention, and
- Figure 5: is a flow chart of a method according to a preferred embodiment of the invention for finding the most suitable operating frequencies of the internal network.

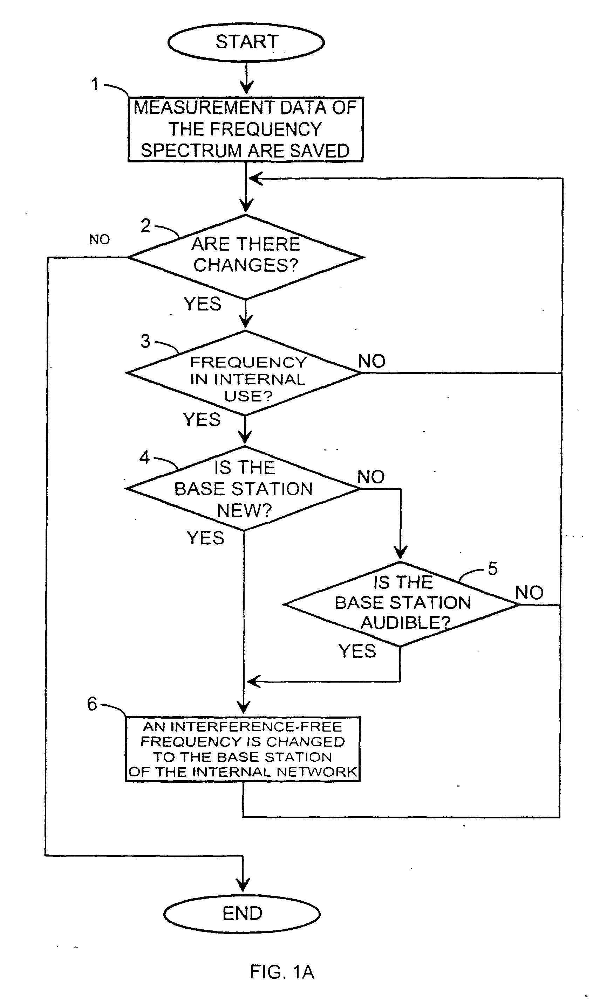

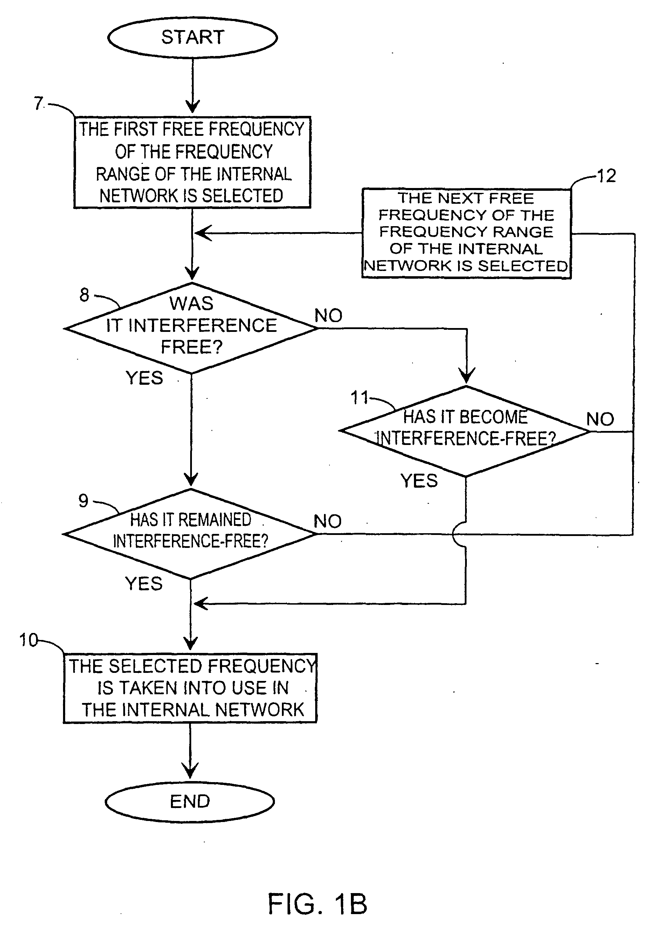

Figures 1A and 1B show a divided flow chart of a method according to the invention for changing earlier determined operating frequencies of the internal network on the basis of the operating frequencies of the base stations of the extemal network and earlier measurement information.

Figure 1A illustrates the following. In the network control system, the results of the earlier measurement of the interfering frequency spectrum are preferably saved as grouped according to the base stations of the internal network 1.

It is examined with the network control system if there are changes in the external network 2, which have not been handled with regard to the internal network. If there are changes that have not been handled, it is examined if the frequency used in the internal network has been taken into use in the external network 3. If the frequency taken into use in the base station of the external network is not in use in the internal network, the process returns to step 2 to examine if there are still changes of the external network, which have not yet been handled. Correspondingly, if it is found out in step 3 that the frequency taken into use in a base station of the external network is in use in the internal network, the process moves to examine if the base station being changed is the new base station installed now 4, which did not exist earlier in the surrounding cellular radio network. If the base station is new and possibly at an interfering distance, which can be discovered when the radio network is being planned, as a precaution the base station of the internal network, the frequency of which is used by the new base station of the external network, is changed to an interference-free frequency on the basis of an earlier measurement and changes of the external network 6. If the base station of the external network is not new and interferes with the internal network on the basis of an earlier measurement 5, the base station of the internal network, the frequency of which is used by a base station of the external network, is changed to an interference-free frequency on the basis of an earlier measurement and changes of the external network 6. If the base station of the external network is not new and has not been interfering before, the process returns to step 2 to examine if there are still changes of the external network left, which have not been handled yet. If there are no unhandled changes of the external network left 2, the process is stopped. It is clear to a person skilled in the art that in steps 3 to 5 of the method described above it is generally examined if a frequency used in a base station of the internal network has been taken into use in the external network, as a result of which an interference-free frequency is changed to the base station of the internal network on the basis of the earlier measurement and the frequencies of the external network, when required.

From Fig. 1B it is seen how an interference-free frequency or a frequency which was originally interference-free and which has not been abandoned in the internal network because of frequency changes of the external network is selected on the basis of an earlier measurement and changes of the external network. In the first step, a first frequency is selected from the frequency range reserved for the internal network 7, which first frequency is not being used by such a base station of the internal network, which could cause interference to the base station for which a new interference-free frequency is being selected. In the next step it is examined if the frequency was interference-free on the basis of an earlier measurement 8. If the frequency is interference-free on the basis of the measurement, it is examined if the frequency has remained interference-free from the changes of the external network 9, and if it has, the selected frequency is taken into use 10. If the frequency was not interference-free in the measurement, it can be examined if the frequency has become interference-free from the changes of the external network 11 and it can be taken into use 10. If an earlier interference-free frequency has not remained such or a frequency which had interference earlier has not become interference-free, the next frequency, which is not being used by such a base station of the internal network, which could cause interference to the base station for which a new interference-free frequency is being selected, is selected from the frequency range of the internal network 12.

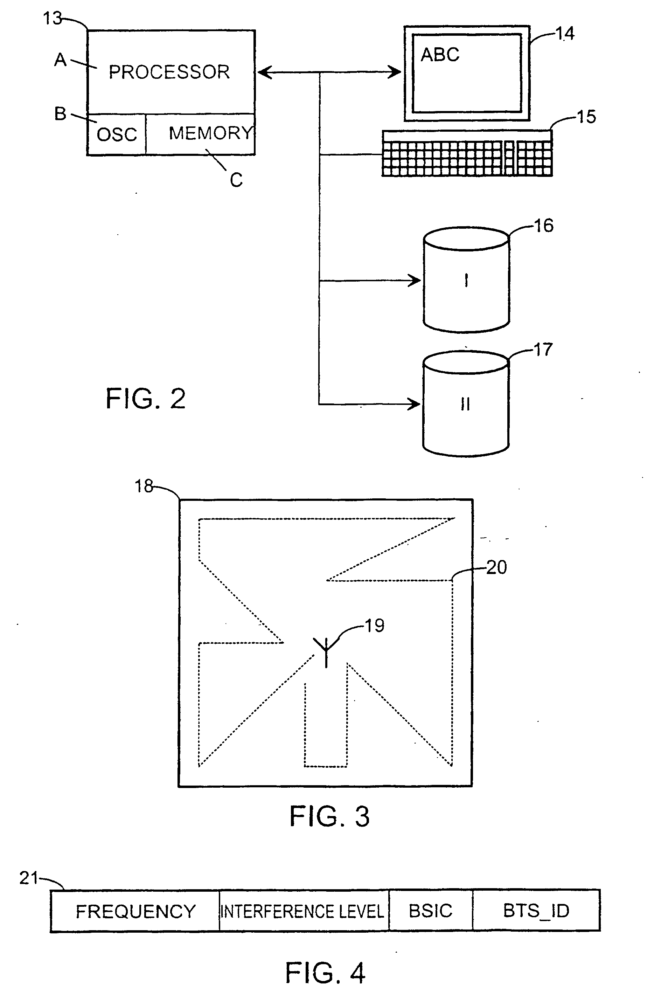

Fig. 2 is a block diagram of an arrangement according to the invention for redetermining the operating frequencies of base stations of the internal network, which have earlier been determined by frequency measurement, when the operating frequency of the base stations of the external network has been changed. The arrangement comprises a processor unit 13, which includes at least a processor A, a oscillator B for stepping the processor and a memory C, a display device 14, a data input device, such as a keyboard 15, a first database 16 for saving the measurement data of an earlier measurement and a second database 17 for saving the operating frequencies of the base stations of the external network. The processor 13 determines the new operating frequencies of the base stations of the internal network on the basis of input data, such as commands given from the keyboard 15, the information of the first database 16 and the second database 17 according to the flow charts of Figures 1A, 1B, for example.

The databases 16, 17 can also be saved in a separate storage element, such as the database of the control system of the mobile communication network. The operational blocks 13, 14, 15, 16, 17 shown in Fig. 2 can be placed alternatively in one or more separate computer devices. Suitable computer devices are a portable computer and a mobile station with multiple functions, for example.

Fig. 3 shows a map of a measuring route for measuring the interference levels indoors. A base station 19 of an internal network is situated in a room 18. The measurement is performed by circulating the base station 19 in the room 18, for example, along a route shown by the broken line 20, which goes to the corners of the room 18 and also close to the base station 19 in order to perform the interference measurement as comprehensively as possible.

Fig. 4 shows, by way of example, a saving form of measurement results, which contains the following information: frequency and interference level and if possible, the Base Station Identification Code (BSIC) and Base Transceiver Station Identification (BTS_ID) of the base station of the external network, which produces the radio transmission. The base station identification code typically consists of the colour codes of the general mobile communication network and the base station. The base transceiver station identification typically consists of the following parts: the Mobile Country Code (MCC), the Mobile Network Code (MNC), the Location Area Code (LAC) and the base station code.

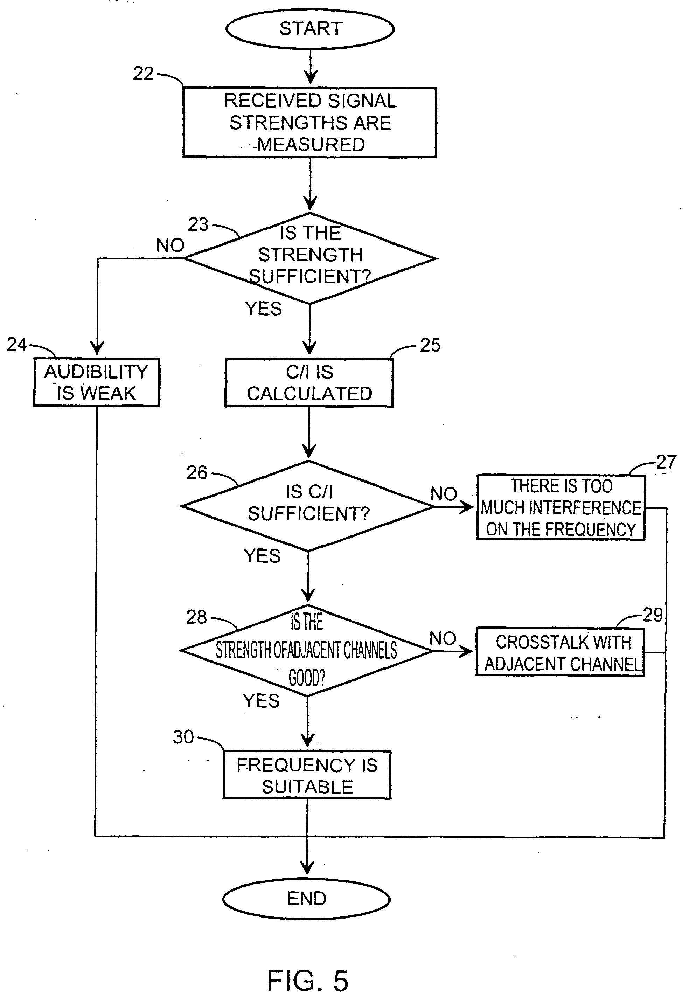

Fig. 5 shows a flow chart of a method according to the invention for finding the most suitable operating frequencies of the internal network with regard to one frequency to be examined. In step 22, the signal strengths (Rx Level) received are measured, while the base station of the internal network transmits a signal on a Broadcast Control Channel (BCCH) selected for the test on the same measurement route as above in Fig. 3, for example. The measurement is performed both on the broadcast control channel selected for the test and all the frequencies to be compared. This provides the information whether the transmission of the broadcast control channel is heard in the area of the internal network and whether the interference is heard in the frequencies to be compared. Of the measurement samples of the signal strength of the broadcast control channel, 90% have to be higher than the minimum value set in advance, step 23. This minimum value is preferably -77 dBm. Because the propagation of the radiowaves in the frequencies used in the system is practically the same, the measurement of the signal strength performed on the selected frequency is also valid at other possible operating frequencies. Here a possible operating frequency means a frequency which was found to be valid in an earlier interference measurement. If the criterion of the signal strength is not met, the audibility is not sufficient but weak, step 24.

When the criterion of the signal strength is met, the Carrier/Interference (C/I) ratio is also calculated in step 25 on the measurement route for all possible operating frequencies by using the samples of the signal strength of the broadcast control channel measured earlier and an interference measurement carried out on the frequencies to be compared. An estimate of the C/I ratio is obtained here by dividing the signal strength received on the broadcast control channel by a signal strength received at the frequency to be compared. Due to the structure of the cellular network, all the frequencies include some signal strength, which is received from other parts of the cellular network. However, the frequency used in the broadcast control channel during the measurement cannot be compared to spurious transmissions on the same channel. In step 26 it is examined whether the C/I ratio is sufficient in all the samples. The sample-specific minimum value of the C/I ratio is preferably 12 dB. If the criterion is not met, the frequency has too much interference, step 27.

In addition to this, the suitability of the channel is estimated by measuring the strength of the adjacent channels so that in addition to measuring if the limit of the C/I ratio, 12 dB, has been reached, the strength of the adjacent channels is also measured for all the samples. The strength must not exceed by more than a certain limit in either channel the signal strength of the broadcast control channel, on which a signal is transmitted for measurement, step 28. The adjacent channel is generally allowed by be stronger by 9 dB at the most, because then the channels can be separated with the frequency accuracy of transmission and reception. If there is a stronger radio transmission on the adjacent channel, it is heard on the actual channel in spite of the channel separation 29. When all the criteria examined in steps 23, 26, 28, are met, the frequency is suitable 30.

At the end of all the measures, the measurement data are saved in a special file e.g. in the following manner.

**Table 1**

| BCCH | BSIC | C/I limit | Audibility limit | 90% audibility limit |
|---|---|---|---|---|
| 52 | 2 | 12 dB | -87 dBm | -77 dBm |
| | | | Portion exceeding the limit | Portion exceeding the limit |
| | | | 100% | 100% |

Table 1 shows the number 52 of the broadcast control channel (BCCH) used for transmission and the base station identification code (BSIC) 2, the limit of an acceptable C/I ratio, 12 dB, absolute audibility limit -87 dBm, the audibility limit - 77 dBm required of 90% of the samples, and next the relative proportions that exceed the audibility limits, here 100%.

**Table 2**

| **BCCH** | **BSIC** | **Average C/I** | **Acceptable samples** |
|---|---|---|---|
| 74 | 2 | 3.5 dB | 17.4% |
| 76 | 2 | 9.1 dB | 34.8% |
| 68 | 4 | 15.8 dB | 60.9% |
| 49 | 5 | 17.0 dB | 63.0% |
| 25 | 2 | 23.7 dB | 76.1% |
| 65 | 1 | 30.7 dB | 82.6% |
| 30 | 1 | 30.5 dB | 82.6% |
| 39 | 6 | 28.9 dB | 84.8% |
| 72 | 3 | 27.0 dB | 87.0% |
| 26 | 3 | 34.7 dB | 91.3% |
| 62 | 5 | 33.2 dB | 95.6% |
| 35 | 5 | 49.5 dB | 97.8% |
| 41 | 5 | 40.7 dB | 97.8% |
| 21 | 5 | 40.7 dB | 100.0% |
| 51 | 3 | 21.9 dB | 100.0% |
| 46 | 1 | 34.7 dB | 100.0% |
| 36 | 5 | 43.5 dB | 100.0% |

Table 2 shows the number of the channel (BCCH) being listened to and the Base Station Identification Code (BSIC), average C/I ratio and a portion of samples of the measurement acceptable for the interference limit, in which C/I > 12 dB.

The table can also be complemented by a column to indicate the interference caused by adjacent channels to each channel. Advantageously it can also indicate which channel causes interference to a certain channel.

The table is also used to establish the order of suitability of the operating frequencies.

Let us discuss as an example the addition of a base station to the external network and the introduction of a new frequency in the new base station to be added. For the internal network the frequency spectrum is measured at first, whereby at least the interference levels at different frequencies of the frequency range are determined, but also the identifier of the cell transmitting the signal, if the identifier can be received correctly. Later, the base station is added to the external network and a new frequency plan is loaded. The old and the new frequency plan are used together with the measurement data of the frequency spectrum to establish whether a frequency used by the internal network has been taken into use in a base station of an external cell in the vicinity, whereby a new frequency has to be changed for the base station of the internal network. The frequency is selected from a table formed on the basis of the frequency plans of the external network and the frequency spectrum measured before the change. However, it is not always possible to know for certain from which base station the earlier interference came, especially if the identification information of the cells corresponding to the interference are not available. However, the base station which is the most likely to produce a certain radio transmission can be concluded on the basis of a chart of the external network, if a chart indicating the location of the base stations is available.

It should also be noted that the measurement of the frequency spectrum of the area of the internal network can be limited to the frequency range used by the internal network, and the frequency range used by the whole system need not be measured. Measurement can be done quicker because of this. The measuring device can be a mobile station equipped with special programs, for example.

In this connection, an interfering transmission means a radio signal transmitted by a base station of the external network, which is audible in the area of the internal network.

The invention is not limited merely to the above examples of application, but many modifications thereof are possible within the scope of the inventive idea defined by the attached claims. Especially it is to be noted that the invention can also be applied in other systems than the GSM system mentioned above. An-example of other systems is the Universal Mobile Telecommunications System (UMTS).

## Claims

1. A method for redetermining the operating frequencies of base stations of an internal network, which is a first cellular radio network or a part of a first cellular radio network, when the operating conditions of the internal network have changed, **characterized in that** the redetermination of the operating frequencies is performed on the basis of a frequency measurement performed for an earlier determination and information about a frequency plan of an external network, which is a second cellular radio network or a part of a second cellular radio network detected in the area of the internal network, by examining (3-5) if a frequency, which interferes with the base station of the internal network, has been taken into use in the external network.

2. A method according to Claim 1, **characterized in that** it includes the following steps:
- saving (1) the results of an earlier measurement, and
- if an interfering frequency is detected (3-5), changing (6) an interference-free frequency to the base station of the internal network on the basis of an earlier measurement and the information about the frequency plan of the external network.

3. A method according to Claim 1, **characterized in that** of the results of the earlier measurement, at least the frequency and the interference level and the identification information of that base station of the external network, which produces the interfering transmission, are saved (1) for the base stations of the internal network.

4. A method according to Claim 1, **characterized in that** when it is noticed that a base station recognized on the basis of an earlier measurement receives (9) in the new frequency plan a frequency already being used in a base station of the internal network, the frequency of the internal network is changed (6) to an interference-free frequency.

5. A method according to Claim 1, **characterized in that** when it is noticed that a base station recognized on the basis of an earlier measurement receives (9) in the new frequency plan a frequency which interferes with a frequency already being used in a base station of the internal network, the frequency of the base station of the internal network is changed (6) to an interference-free frequency.

6. A method according to Claim 1, **characterized in that** when it is detected (11) from the frequency plan that a frequency that was used by the external network and found to be affected by interference in an earlier measurement has become interference-free because it is not used any more, this frequency is taken into use by the internal network.

7. A method according to Claim 1, **characterized in that** it also includes the following steps for checking the suitability of the frequency to be taken into use:
- measuring (22) the signal strength (Rx Level) received in the area of the internal network in the measurement route when the base station of the internal network transmits a signal on the broadcast control channel (BCCH),
- examining (23) if a certain predetermined proportion of the measurement samples of the signal strength is higher than a minimum value set in advance.

8. A method according to Claim 7, **characterized in that** the C/I ratio is calculated (25) by using the measured samples of the signal strength (Rx Level) of the broadcast control channel (BCCH) and the interference measurement performed on the frequencies to be compared.

9. A method according to Claim 8, **characterized in that**
- it is examined (26) if the C/I ratio is better than a certain predetermined minimum value in all the samples, and
- the frequency is accepted (30) if the signal strength is sufficient and the C/I ratio is better than a certain limit.

10. A method according to Claim 7, **characterized in that** in addition, to prevent the crosstalk of an adjacent channel, a measurement and examination (28) for accepting (30) the frequency is performed.

11. A method according to Claim 10, **characterized in that** the strength of both adjacent channels is at the most by a certain predetermined maximum value higher than the signal strength of the channel being considered.

12. An arrangement for redetermining the operating frequencies of base stations of an internal network, which is a first cellular radio network or a part of a first cellular radio network, when the operating frequencies have been earlier determined by frequency measurement but the operating conditions of the internal network have changed, **characterized in that** it includes data processing means (13, 14, 15, 16, 17) for the redetermination of the operating frequencies on the basis of a frequency measurement performed for an earlier determination and information <about a frequency plan> of an external network, which is a second cellular radio network or a part of a second cellular radio network detected in the area of the internal network, by examining if a frequency, which interferes with the base station of the internal network, has been taken into use in the external network, said data processing means including a database (17) for saving the operating frequencies in use at base stations of the external network.

13. An arrangement according to Claim 12, **characterized in that** it includes
- a first database (16) for saving the information of a measurement performed earlier,
- a second database (17) for saving the operating frequencies of base stations of the external network, and
- a processor (13) for the redetermination of the operating frequencies of base stations of the internal network carried out on the basis of the information of the first database and the second database.

14. An arrangement according to Claim 13, **characterized in that** the first database (16) comprises information about frequencies measured in an earlier measurement and the interference levels measured in them.

15. An arrangement according to Claim 14, **characterized in that** the information of at least one measured frequency comprise identification information of a base station of the external network detected at the frequency in question.

16. An arrangement according to Claim 14, **characterized in that** the first database (16) also comprises the following earlier measured pieces of information for checking the suitability of the frequency taken into use:
- the signal strength (Rx Level) received when the base station of the internal network transmits a signal on the broadcast control channel (BCCH),

17. An arrangement according to Claim 16, **characterized in that** the data saved earlier also comprise the C/I ratio, which has been calculated by using the samples of the signal strength (Rx Level) received on the broadcast control channel (BCCH) and the interference measurement carried out on other frequencies.

## Patentansprüche

1. Verfahren zum Neubestimmen der Betriebsfrequenzen von Basisstationen eines internen Netzwerks, welches ein erstes zellulares Funknetzwerk oder ein Teil eines ersten zellularen Funknetzwerks ist, wenn sich die Betriebsbedingungen des internen Netzwerks verändert haben, **dadurch gekennzeichnet, dass** die Neubestimmung der Betriebsfrequenzen auf Grundlage einer für eine frühere Bestimmung durchgeführten Frequenzmessung und Informationen über einen Frequenzplan eines externen Netzwerks durchgeführt wird, welches ein zweites zellulares Funknetzwerk oder ein Teil eines zweiten zellularen Funknetzwerks ist, das im Bereich des internen Netzwerks erfasst wurde, indem untersucht (3-5) wird, ob eine mit der Basisstation des internen Netzwerks interferierende Frequenz im externen Netzwerk in Verwendung genommen wurde.

2. Verfahren gemäß Anspruch 1, **dadurch gekennzeichnet, dass** es die folgenden Schritte aufweist:
- Speichern (1) der Ergebnisse einer früheren Messung, und
- falls eine interferierende Frequenz erfasst wird (3-5), Umschalten (6) der Basisstation des internen Netzwerks auf eine interferenzfreie Frequenz auf Grundlage einer früheren Messung und der Informationen über den Frequenzplan des externen Netzwerks.

3. Verfahren gemäß Anspruch 1, **dadurch gekennzeichnet, dass** die Ergebnisse der früheren Messung, zumindest die Frequenz und der Interferenzpegel und die Identifikationsinformation dieser Basisstation des externen Netzwerks, die die interferierende Übertragung erzeugt, für die Basisstationen des internen Netzwerks gespeichert werden (1).

4. Verfahren gemäß Anspruch 1, **dadurch gekennzeichnet, dass** die Frequenz des internen Netzwerks auf eine interferenzfreie Frequenz umgeschaltet wird (6), wenn festgestellt wird, dass eine auf Grundlage einer früheren Messung erkannte Basisstation im neuen Frequenzplan eine bereits in einer Basisstation des internen Netzwerks verwendete Frequenz empfängt (9).

5. Verfahren gemäß Anspruch 1, **dadurch gekennzeichnet, dass** die Frequenz der Basisstation des internen Netzwerks auf eine interferenzfreie Frequenz umgeschaltet wird (6), wenn festgestellt wird, dass eine auf Grundlage einer früheren Messung erkannte Basisstation im neuen Frequenzplan eine Frequenz empfängt (9), die mit einer bereits in einer Basisstation des internen Netzwerks verwendeten Frequenz interferiert.

6. Verfahren gemäß Anspruch 1, **dadurch gekennzeichnet, dass,** wenn es aus dem Frequenzplan erfasst wird (11), dass eine Frequenz, die vom externen Netzwerk verwendet und über die herausgefunden wurde, dass sie bei einer früheren Messung von Interferenz beeinflusst wurde, interferenzfrei wurde, weil sie nicht mehr verwendet wird, diese Frequenz vom internen Netzwerk in Verwendung genommen wird.

7. Verfahren gemäß Anspruch 1, **dadurch gekennzeichnet, dass** es die folgenden Schritte zum Überprüfen der Eignung der in Verwendung zu nehmenden Frequenzen aufweist:
- Messen (22) der Signalstärke (Rx-Pegel), die im Bereich des internen Netzwerks auf der Messstrecke empfangen wird, wenn die Basisstation des internen Netzwerks ein Signal auf dem Rundsendungssteuerkanal (BCCH) überträgt,
- Untersuchen (23), ob ein bestimmtes vorbestimmtes Verhältnis der Messabtastwerte der Signalstärke größer ist als ein im Voraus eingestellter Minimalwert.

8. Verfahren gemäß Anspruch 7, **dadurch gekennzeichnet, dass** das C/I-Verhältnis unter Verwendung der gemessenen Abtastwerte der Signalstärke (Rx-Pegel) des Rundsendungssteuerkanals (BCCH) und der auf den zu vergleichenden Frequenzen durchgeführten Interferenzmessung berechnet wird (25).

9. Verfahren gemäß Anspruch 8, **dadurch gekennzeichnet, dass**
- untersucht wird (26), ob das C/I-Verhältnis bei allen Abtastwerten besser ist als ein bestimmter vorbestimmter Minimalwert, und
- die Frequenz akzeptiert wird (30), falls die Signalstärke ausreicht und das C/I-Verhältnis besser ist als ein bestimmter Grenzwert.

10. Verfahren gemäß Anspruch 7, **dadurch gekennzeichnet, dass** zum Verhindern des Übersprechens eines angrenzenden Kanals zusätzlich eine Messung und eine Untersuchung (28) zum Akzeptieren (30) der Frequenz durchgeführt wird.

11. Verfahren gemäß Anspruch 10, **dadurch gekennzeichnet, dass** die Stärke beider angrenzender Kanäle höchstens um einen bestimmten vorbestimmten Maximalwert größer ist als die Signalstärke des betrachteten Kanals.

12. Anordnung zum Neubestimmen der Betriebsfrequenzen von Basisstationen eines internen Netzwerks, welches ein erstes zellulares Funknetzwerk oder ein Teil eines ersten zellularen Funknetzwerks ist, wenn die Betriebsfrequenzen früher mittels einer Frequenzmessung bestimmt wurden, aber sich die Betriebsbedingungen des internen Netzwerks verändert haben, **dadurch gekennzeichnet, dass** sie Datenverarbeitungseinrichtungen (13, 14, 15, 16, 17) für die Neubestimmung der Betriebsfrequenzen auf Grundlage einer für eine frühere Bestimmung durchgeführten Frequenzmessung und Informationen über einen Frequenzplan eines externen Netzwerks umfasst, welches ein zweites zellulares Funknetzwerk oder ein Teil eines zweiten zellularen Funknetzwerks ist, das im Bereich des internen Netzwerks erfasst wurde, indem untersucht wird, ob eine mit der Basisstation des internen Netzwerks interferierende Frequenz im externen Netzwerk in Verwendung genommen wurde, wobei die Datenverarbeitungseinrichtungen eine Datenbank (17) zum Speichern der an Basisstationen des externen Netzwerks in Verwendung befindlichen Betriebsfrequenzen aufweist.

13. Anordnung gemäß Anspruch 12, **dadurch gekennzeichnet, dass** sie aufweist:
- eine erste Datenbank (16) zum Speichern der Informationen einer früher durchgeführten Messung,
- eine zweite Datenbank (17) zum Speichern der Betriebsfrequenzen von Basisstationen des externen Netzwerks, und
- einen Prozessor (13) für die Neubestimmung der Betriebsfrequenzen von Basisstationen des internen Netzwerks, die auf Grundlage der Informationen der ersten Datenbank und der zweiten Datenbank durchgeführt wird.

14. Anordnung gemäß Anspruch 13, **dadurch gekennzeichnet, dass** die erste Datenbank (16) Informationen über bei einer früheren Messung gemessene Frequenzen und die auf diesen gemessenen Interferenzpegel aufweist.

15. Anordnung gemäß Anspruch 14, **dadurch gekennzeichnet, dass** die Informationen von zumindest einer gemessenen Frequenz eine Identifikationsinformation einer Basisstation des externen Netzwerks aufweisen, die auf der in Frage stehenden Frequenz erfasst wurde.

16. Anordnung gemäß Anspruch 14, **dadurch gekennzeichnet, dass** die erste Datenbank (16) zum Überprüfen der Eignung der in Verwendung genommenen Frequenzen auch die folgenden früher gemessenen Informationen aufweist:
- die Signalstärke (Rx-Pegel), die empfangen wurde, wenn die Basisstation des internen Netzwerks ein Signal auf dem Rundsendungssteuerkanal (BCCH) überträgt.

17. Anordnung gemäß Anspruch 16, **dadurch gekennzeichnet, dass** die früher gespeicherten Daten auch das C/I-Verhältnis aufweisen, das unter Verwendung der Abtastwerte der Signalstärke (Rx-Pegel), die auf dem Rundsendungssteuerkanal (BCCH) empfangen wurde, und der auf anderen Frequenzen durchgeführten Interferenzmessung berechnet wurde.

## Revendications

1. Procédé pour redéterminer les fréquences de fonctionnement de stations de base d'un réseau interne, qui est un premier réseau radio cellulaire ou une partie d'un premier réseau radio cellulaire, lorsque les conditions de fonctionnement du réseau interne ont changé, **caractérisé en ce que** la redétermination des fréquences de fonctionnement est effectuée sur la base d'une mesure de fréquence effectuée pour une détermination précédente et d'informations concernant un plan de fréquences d'un réseau externe, qui est un deuxième réseau radio cellulaire ou une partie d'un deuxième réseau radio cellulaire détecté dans la zone du réseau interne, en examinant (3-5) si une fréquence, qui interfère avec la station de base du réseau interne, a été utilisée dans le réseau externe.

2. Procédé selon la revendication 1, **caractérisé en ce qu'**il comprend les étapes consistant à :
- enregistrer (1) les résultats d'une mesure précédente, et
- si une fréquence interférente est détectée (3-5), modifier (6) en une fréquence exempte d'interférence pour la station de base du réseau interne sur la base d'une mesure précédente et des informations concernant le plan de fréquences du réseau externe.

3. Procédé selon la revendication 1, **caractérisé en ce que**, parmi les résultats de la mesure précédente, au moins la fréquence et le niveau d'interférence et les informations d'identification de cette station de base du réseau externe, qui produit la transmission interférente, sont enregistrés (1) pour les stations de base du réseau interne.

4. Procédé selon la revendication 1, **caractérisé en ce que**, lorsqu'il est noté qu'une station de base reconnue sur la base d'une mesure précédente reçoit (9) dans le nouveau plan de fréquences une fréquence déjà utilisée dans une station de base du réseau interne, la fréquence du réseau interne est modifiée (6) en une fréquence exempte d'interférence.

5. Procédé selon la revendication 1, **caractérisé en ce que**, lorsqu'il est noté qu'une station de base reconnue sur la base d'une mesure précédente reçoit (9) dans le nouveau plan de fréquences une fréquence qui interfère avec une fréquence déjà utilisée dans une station de base du réseau interne, la fréquence de la station de base du réseau interne est modifiée (6) en une fréquence exempte d'interférence.

6. Procédé selon la revendication 1, **caractérisé en ce que**, lorsqu'il est détecté (11) à partir du plan de fréquences qu'une fréquence qui était utilisée par le réseau externe et qui s'est avérée être affectée par une interférence dans une mesure précédente est devenue exempte d'interférence parce qu'elle n'est plus utilisée, cette fréquence est utilisée par le réseau interne.

7. Procédé selon la revendication 1, **caractérisé en ce qu'**il comprend également les étapes suivantes pour vérifier l'applicabilité de la fréquence devant être utilisée consistant à :
- mesurer (22) l'intensité de signal (Rx Level) reçue dans la zone du réseau interne sur la voie d'acheminement de mesure lorsque la station de base du réseau interne émet un signal sur le canal de contrôle diffusé (BCCH),
- examiner (23) si une certaine proportion prédéterminée des échantillons de mesure de l'intensité de signal est supérieure à une valeur minimum fixée au préalable.

8. Procédé selon la revendication 7, **caractérisé en ce que** le rapport C/I est calculé (25) en utilisant les échantillons mesurés de l'intensité de signal (Rx Level) du canal de contrôle diffusé (BCCH) et la mesure d'interférence effectuée sur les fréquences devant être comparées.

9. Procédé selon la revendication 8, **caractérisé en ce que** :
- il est examiné (26) si le rapport C/I est meilleur qu'une certaine valeur minimum prédéterminée dans tous les échantillons, et
- la fréquence est acceptée (30) si l'intensité de signal est suffisante et si le rapport C/I est meilleur qu'une certaine limite.

10. Procédé selon la revendication 7, **caractérisé en ce que**, en plus, pour éviter le couplage parasite d'un canal adjacent, une mesure et un examen (28) pour accepter (30) la fréquence sont effectués.

11. Procédé selon la revendication 10, **caractérisé en ce que** l'intensité des deux canaux adjacents est au plus supérieure d'une certaine valeur maximum prédéterminée à l'intensité de signal du canal examiné.

12. Agencement pour redéterminer les fréquences de fonctionnement de stations de base d'un réseau interne, qui est un premier réseau radio cellulaire ou une partie d'un premier réseau radio cellulaire, lorsque les fréquences de fonctionnement ont été déterminées précédemment par une mesure de fréquence mais que les conditions de fonctionnement du réseau interne ont changé, **caractérisé en ce qu'**il comprend des moyens de traitement de données (13, 14, 15, 16) 17) pour la redétermination des fréquences de fonctionnement sur la base d'une mesure de fréquence effectuée pour une détermination précédente et d'informations concernant un plan de fréquences d'un réseau externe, qui est un deuxième réseau radio cellulaire ou une partie d'un deuxième réseau radio cellulaire détecté dans la zone du réseau interne, en examinant si une fréquence, qui interfère avec la station de base du réseau interne, est utilisée dans le réseau interne, lesdits moyens de traitement de données comprenant une base de données (17) pour mémoriser les fréquences de fonctionnement utilisées au niveau des stations de base du réseau externe.

13. Agencement selon la revendication 12, **caractérisé en ce qu'**il comprend :
- une première base de données (16) pour mémoriser les informations d'une mesure effectuée précédemment,
- une deuxième base de données (17) pour mémoriser les fréquences de fonctionnement de stations de base du réseau externe, et
- un processeur (13) pour la redétermination des fréquences de fonctionnement de stations de base du réseau interne effectuée sur la base des informations de la première base de données et de la deuxième base de données.

14. Agencement selon la revendication 13, **caractérisé en ce que** la première base de données (16) comprend des informations concernant des fréquences mesurées lors d'une mesure précédente et les niveaux d'interférence mesurés dans celles-ci.

15. Agencement selon la revendication 14, **caractérisé en ce que** les informations d'au moins une fréquence mesurée comprennent des informations d'identification d'une station de base du réseau externe détectée à la fréquence en question.

16. Agencement selon la revendication 14, **caractérisé en ce que** la première base de données (16) comprend également les éléments d'informations suivants mesurés précédemment pour vérifier l'applicabilité de la fréquence utilisée :
- l'intensité de signal (Rx Level) reçue lorsque la station de base du réseau interne émet un signal sur le canal de contrôle diffusé (BCCH).

17. Agencement selon la revendication 16, **caractérisé en ce que** les données enregistrées précédemment comprennent également le rapport C/I, qui a été calculé en utilisant les échantillons de l'intensité de signal (Rx Level) reçue sur le canal de contrôle diffusé (BCCH) et la mesure d'interférence effectuée sur d'autres fréquences.
